# EUROPEAN PATENT SPECIFICATION

(11) **EP 0 957 007 B1**
(45) Date of publication and mention of the grant of the patent: **09.03.2005**
(21) Application number: 99108620.8
(22) Date of filing: 11.05.1999
(51) Int. Cl.: B60R 21/20

(54) **Airbag for front passenger and folding method thereof**
Luftsack für Beifahrer und Faltungsverfahren dafür
Coussin gonflable pour passager avant et son procédé de pliage

(30) Priority: 11.05.1998 JP 14206298
(43) Date of publication of application: 17.11.1999
(73) Proprietor: TAKATA CORPORATION, Shiga 529-1388 (JP)
(72) Inventor: Tadahiro, Igawa, c/o Takata Corporation, Echi-gun, Shiga 529-1388 (JP)
(74) Representative: VOSSIUS & PARTNER

(56) References cited:
- EP-A- 0 997 352
- US-A- 5 382 048
- US-A- 5 636 861
- PATENT ABSTRACTS OF JAPAN vol. 1997, no. 10, 31 October 1997 (1997-10-31) & JP 09 142249 A (TOYO TIRE &RUBBER CO LTD), 3 June 1997 (1997-06-03) & US 5 884 939 A (OZAKI TORU ET AL) 23 March 1999 (1999-03-23)
- PATENT ABSTRACTS OF JAPAN vol. 1995, no. 11, 26 December 1995 (1995-12-26) & JP 07 205750 A (TOYO TIRE & RUBBER CO LTD), 8 August 1995 (1995-08-08)
- PATENT ABSTRACTS OF JAPAN vol. 1999, no. 03, 31 March 1999 (1999-03-31) & JP 10 338096 A (TAKATA KK), 22 December 1998 (1998-12-22)

## Description

The present invention relates to an airbag for a front passenger which is deployed to protect an occupant in the event of vehicle collision, and to a folding method used therefore. More particularly, the present invention relates to an airbag for protecting a front passenger which can accomplish suitable deployment to secure sufficient ability for restraining an occupant and which is improved on the smoothness of the deployment and to a folding method used therefore.

US-A-5 382 048 relates to a folded configuration of top mounted air bag cushions which uses several fold variations including a folded bubble on top, tucks, a pleat and rolls which inversely roll down the vehicle dashboard when an inflating fluid under pressure flows into the cushion, which folds can only unfold in sequence one after another so that the cushion does not unfold faster than it can be filled with inflating fluid and deploys relatively slowly in a downward trajectory.

US-A-5 884 939 which is a family member of JP-A-9-14 22 49 describes an embodiment in which the air bag system has a folded portion which can comprise a upper zigzag folded portion and a lower portion wound in a roll.

JP-A-07-20 57 50 relates to an air bag in which the windshield side and the occupant's side are folded in a bellows shape, and also pleats of bellows of the air bag occupant side are sewn by a controlling stitch burst by a prescribed unfolding pressure of the air bag, to delay unfolding the air bag occupant side asymmetrically relating to the windshield side.

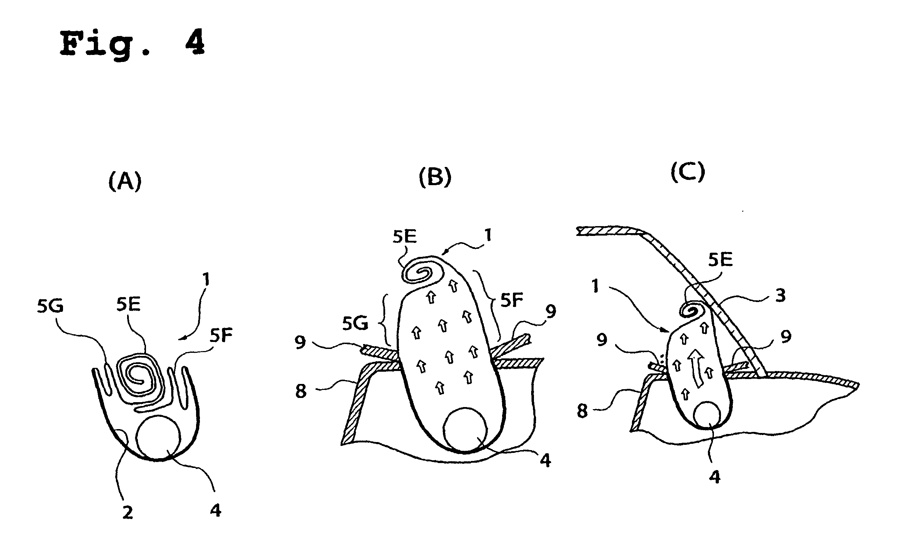

Figs. 4(A), 4(B), and 4(C) are views showing the configurations of an airbag for a front passenger (hereinafter, referred to as "passenger airbag"), during its deployment, which is folded in one of conventional folding methods. Fig. 4(A) is a side view showing the passenger airbag (hereinafter, sometimes referred to as just "bag") 1 accommodated in an airbag case 2. In these figures, the right hand side is a windshield side and the left hand side is an occupant side (the counter-windshield side).

In Fig. 4(A), the right and left end portions (loosened portions 5G, 5F) of the bag 1 are folded in bellows and a tip portion (wounded portion 5E) is wound in such a manner that a windshield-side surface becomes the outer surface of the wound body and, after that, the entire of the bag 1 is accommodated in the airbag case 2. The bag 1 is fixed to the inner surface of an opening of the airbag case 2 by fittings (not shown). The loosened portions 5F, 5G are formed by folding in bellows both the windshield side and the counter-windshield side. Inside of the airbag case 2, an inflator 4 for generating gas for deploying bag is disposed. The airbag case 2 is installed in an instrument panel (8 in Fig. 4(B) in front of the front passenger seat within a vehicle.

The passenger bag shown in Fig. 4(A) starts to be deployed through an upper portion of the instrument panel and is inflated upward. The description will now be made as regard to the configurations of the passenger airbag, during its deployment where it is inflated upward, which is folded as shown in Fig. 4(A).

Figs. 4(B) and 4(C) are views showing the configurations of the passenger . airbag, during its deployment, which is folded in the conventional manner shown in Fig. 4(A). In Fig. 4(B), as gas from the inflator 4 disposed in the airbag case 2 flows into the bag 1 as shown by arrows, an airbag cover 9 attached to the instrument panel 8 is broken by the gas pressure in the bag 1 and the bag 1 is deployed above the instrument panel 8. At this point, gas first flows into the loosened portions 5F, 5G on the windshield side and the counter-windshield side, prior to the wound portion 5E of the bag 1. That is, the bag 1 is first deployed at the loosened portions 5F, 5G and, after that, deployed at the wound portion 5E.

However, according to the passenger airbag which is folded in the conventional method as described above, the loosened portions 5F, 5G are first deployed so that the wound portion 5E is pushed up by the deployed loosened portions 5F, 5G. This means that the wound portion 5E is kept in the folded state during it is risen up.

The wound portion 5E is pushed upward (arrow A) when it is still in the folded state as shown in Fig. 4(C) so that the portion 5E strikes the windshield 3 in the wound state. With this deployment process of the bag 1, there is a possibility that the windshield 3 is subjected to undesired local pressure. In order to prevent the application of undesired local pressure on the windshield 3, various measures have been taken, for example, reducing the output of the inflator 4, adjusting the mount position of the bag 1 and/or the angle for mounting the airbag case 2, and increasing the strength of the windshield 3. These measures limit the degree of free for designing the airbag and the instrument panel and, in addition, increase the cost.

The present invention was made in order to solve the above problem and the object of this invention is to provide a passenger airbag which can provide suitable deployment to secure sufficient ability for restraining an occupant, which is improved on the smoothness of the deployment, and which makes it possible to prevent the application of undesired local pressure on the windshield 3 without increase in the cost, and also relates to provide a folding method used therefore. This object is achieved with the features of the claims.

An airbag according to the first aspect is an airbag to be deployed in front of a front passenger seat, wherein the airbag is folded to have looseness only on the windshield side when accommodated, whereby, during the deployment of the bag, gas first flows into the looseness so that the windshield side is deployed prior to the counter-windshield side.

Further, an airbag according to the second aspect is an airbag to be deployed in front of a front passenger seat, wherein the airbag is folded to have looseness on both the windshield side and the counter-windshield side in such a manner that the number of the looseness on the windshield side is larger than that of the looseness on the counter-windshield side, whereby, during the deployment of said bag, larger volume of gas flows into the looseness on the windshield side compared to that on the counter-windshield side so that the windshield side is deployed prior to the counter-windshield side.

Furthermore, an airbag according to the third aspect is an airbag to be deployed in front of a front passenger seat, wherein the airbag is folded to have looseness on both the windshield side and the counter-windshield side in such a manner that the length of the looseness on the windshield side is longer than that of the looseness on the counter-windshield side, whereby, during the deployment of said bag, larger volume of gas flows into the looseness on the windshield side compared to that on the counter-windshield side and the windshield side is therefore deployed prior to the counter-windshield side.

In the airbag for a front passenger seat according to the first through third aspect, the bag starts its deployment at the windshield side and a portion of the bag, which is already inflated with its folded portion undone, comes in contact with the windshield, so the force applied to the windshield is distributed so as to reduce the pressure on the windshield.

In addition, an airbag according to the fourth aspect is an airbag to be deployed in front of a front passenger seat, wherein the airbag is folded to have looseness only on the windshield side and to make a tip portion of the bag to be folded or rolled up on the counter-windshield side when accommodated, whereby, during the deployment of the bag, gas first flows into the looseness so that the windshield side is deployed prior to the counter-windshield side and the tip portion is deployed toward an upper area of the counter-windshield side.

Further, an airbag according to the fifth aspect is an airbag to be deployed in front of a front passenger seat, wherein the airbag is folded to have looseness on both the windshield side and the counter-windshield side in such a manner that the number of the looseness on the windshield side is larger than that of the looseness on the counter-windshield side and to make a tip portion of the bag to be folded or rolled up on the counter-windshield side, whereby, during the deployment of said bag, larger volume of gas flows into the looseness on the windshield side compared to that on the counter-windshield side so that the windshield side is deployed prior to the counter-windshield side and the tip portion is deployed toward an upper area of the counter-windshield side.

Furthermore, an airbag according to the sixth aspect is an airbag to be deployed in front of a front passenger seat, wherein the airbag is folded to have looseness on both the windshield side and the counter-windshield side in such a manner that the length of the looseness on the windshield side is longer than that of the looseness on the counter-windshield side and to make a tip portion of the bag to be folded or rolled up on the counter-windshield side when accommodated, whereby, during the deployment of said bag, larger volume of gas flows into the looseness on the windshield side compared to that on the counter-windshield side so that the windshield side is deployed prior to the counter-windshield side and the tip portion is deployed toward an upper area of the counter-windshield side.

In the airbag for a front passenger seat according to the fourth through sixth aspects, the tip portion of the bag is folded or rolled up on the counter-windshield side, whereby the bag starts its deployment at the windshield side and the rolled-up or folded body of the bag is prevented from being directed toward the windshield during the deployment of the bag.

A folding method according to the first aspect is a folding method of an airbag to be deployed in front of a front passenger seat, including a step of folding only an end of the windshield side of the bag in accordion shape to have looseness.

A folding method according to the second aspect is a folding method of an airbag to be deployed in front of a front passenger seat, including: a step of folding ends of both the windshield side and the counter-windshield side of the bag in accordion shape to have looseness on both said ends in such a manner that the number of the looseness on the windshield side is larger than that of the looseness on the counter-windshield side.

Furthermore, a folding method according to the third aspect is a folding method of an airbag to be deployed in front of a front passenger seat, including a step of folding ends of both the windshield side and the counter-windshield side of the bag in accordion shape to have looseness on both the windshield side and the counter-windshield side in such a manner that the length of the looseness on the windshield side is longer than that of the looseness on the counter-windshield side. At this point, the length of the looseness on the windshield side is twice or more as long as that of the looseness on the counter-windshield side.

In the folding method of an airbag for a front passenger seat according to the first through third aspects, the bag starts its deployment at the windshield side and a portion of the bag, which is already inflated with its folded portion undone, comes in contact with the windshield, so the force applied to the windshield is distributed so as to reduce the pressure on the windshield.

In addition, a folding method according to the fourth aspect is a folding method of an airbag to be deployed in front of a front passenger seat, including a step of folding only an end of the windshield side of the bag in accordion shape to have looseness, and a step of folding or rolling up a tip portion of said bag on the counter-windshield side and then accommodating said bag.

Further, a folding method according to the fifth aspect is a folding method of an airbag to be deployed in front of a front passenger seat, including: a step of folding ends of both the windshield side and the counter-windshield side of the bag in accordion shape to have looseness on both the ends in such a manner that the number of the looseness on the windshield side is larger than that of the looseness on the counter-windshield side, and a step of folding or rolling up a tip portion of said bag on the counter-windshield side and then accommodating said bag.

In order to solve the above-described problems, a folding method according to the present invention the sixth aspect is defined in claim 1. This folding method of an airbag to be deployed in front of a front passenger seat, includes a step of folding ends of both the windshield side and the counter-windshield side of the bag in accordion shape to have looseness both on the windshield side and the counter-windshield side in such a manner that the length of the looseness on the windshield side is longer than that of the looseness on the counter-windshield side, and a step of folding or rolling up a tip portion of said bag on the counter-windshield side and then accommodating said bag. At this point, the length of the looseness on the windshield side is twice or more as long as that of the looseness on the counter-windshield side.

In the folding method of an airbag for a front passenger seat according to the fourth through sixth aspects, the tip portion of the bag is folded or rolled up on the counter-windshield side, whereby the bag starts its deployment at the windshield side and the rolled-up or folded body of the bag is prevented from being directed toward the windshield during the deployment of the bag.

Hereinafter, the present invention will be described with reference to attached drawings.
Figs. 1(A_{front})-1(F_{side}) are views illustrating a folding process according to a folding method of an airbag.
Figs. 2(A)-2(D) are views showing variations of the folding method according to the embodiment shown in Figs. 1(A_{front})-1(F_{side}).
Figs. 3(A)-3(D) are views showing configurations of the airbag shown in Figs. 2(A)-2(D) during its deployment.
Figs. 4(A) and 4(C) are views showing the configurations of the passenger airbag, during its deployment, which is folded in the conventional method.

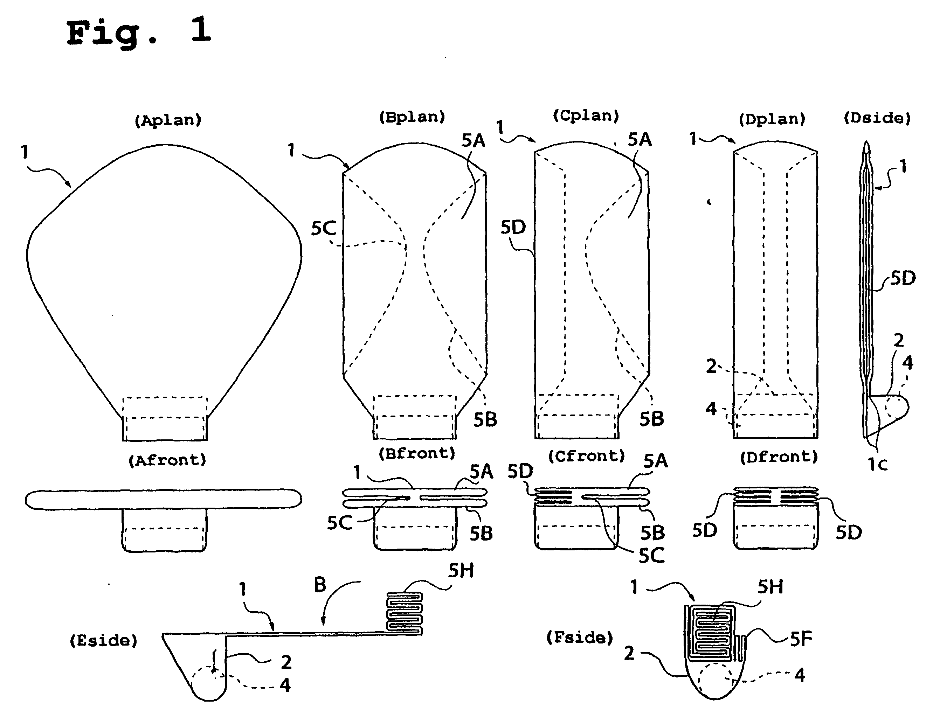

Figs. I(Aₚₗₐₙ) through (F_{side}) are views illustrating process of folding a passenger airbag. Fig. 1(Aₚₗₐₙ) is a plan view of the bag 1 taken from the upper side and Fig. 1(A_{front}) is a front view of the bag 1 taken from a side confronting a windshield. In these drawings, the bag 1 is not folded yet and spreads.

Figs. 1(B_{front}) and (Bₚₗₐₙ) illustrate a first stage of the folding process. Fig. 1(Bₚₗₐₙ) is a plan view of the bag 1 taken from the upper side and Fig. 1(B_{front}) is a front view of the bag 1 taken from the side confronting the windshield. In the first stage of the folding process, a portion of the bag 1 about the center thereof is picked up and both side edges are put inside toward the center of the airbag 1 to form edge portions 5A and 5B which are overlaid on each other. Formed between the respective edge portions 5A and 5B are concavities 5C, 5C. At this point, the width of the edge portions 5A is nearly equal to the width of the edge portions 5B.

Figs. 1(C_{front}) and (Cₚₗₐₙ) illustrate the second stage of the folding process, wherein Fig. 1(Cₚₗₐₙ) is a plan view of the bag 1 taken from the upper side and Fig. 1(C_{front}) is a front view of the bag 1 taken from the side confronting the windshield. As shown in Figs. 1(C_{front}) and (Cₚₗₐₙ), in the second stage of the folding process, the left-hand-side doubled edge (consisting of the left edge portions 5A, 5B, and concavity 5C) is folded in such a manner the edge portion 5A, 5B are each further doubled by folding to form bellows 5D on the left hand side of the bag 1.

Figs. 1(D_{front}), (Dₚₗₐₙ), and (D_{side}) illustrate the third stage of the folding process, wherein Fig. 1(Dₚₗₐₙ) is a plan view of the bag 1 taken from the upper side, Fig. 1(D_{front}) is a front view of the bag 1 taken from the side confronting the windshield, and Fig 1(D_{side}) is a side view of the bag 1 taken from the lateral side. In the third stage of the folding process, in the same manner as the second stage shown in Figs. 1(C_{front}) and (Cₚₗₐₙ), the right-hand-side doubled edge (consisting of the right edge portions 5A 5B, and concavity 5C) is folded in such a manner the edge portions 5A, 5B are each further doubled by folding to form bellows 5D on the right hand side of the bag 1. In this manner, as shown in Fig. 1(D_{front}), the bellows 5D, 5D are formed on the right and left hand sides of the bag 1. A stem 1c of the bag 1 is connected and fixed to an airbag case 2 as shown in Fig. 1(D_{side}). At this point, the width formed by the bellows 5D, 5D is equal to or smaller than the width of the airbag case 2. Arranged within the airbag case 2 is an inflator 4 for generating gas for deploying the bag.

Fig. 1(E_{side}) is a side view of the bag 1 taken from the lateral side, illustrating the fourth stage of the folding process. The right hand side of the Fig. 1(E_{side}) is the windshield side. As shown in Fig. 1(E_{side}), in the fourth stage of the folding process, a tip portion of the bag 1 is folded several times in accordion configuration to form a accordion fold body 5H on the upper side of the bag 1. The accordion fold body 5H is rolled up in the direction of arrow B (the counter-clockwise direction) and the bag 1 is thus accommodated in the airbag case 2.

Fig. 1(F_{side}) is a side view of the bag 1 taken from the lateral side, illustrating the final stage of the folding process. The accordion fold body 5H is rolled up in the direction of arrow B (the counter-clockwise direction) as shown in Fig. 1 (E_{side}) and the bag 1 is accommodated in the airbag case 2. The bag 1 is fixed to the inside of an opening of the airbag case 2 by fittings (not shown). The fittings not only fix the bag 1 but also seal the inside of the bag 1 and the inside of the airbag case 2. When the bag 1 is accommodated in the airbag case 2, an accordion fold looseness 5F is formed only on the windshield side (the right hand side of the drawing) of the accordion fold body 5H of the bag 1.

Hereinafter, variations of the folding method according to the embodiment of Figs. 1(Aₚₗₐₙ)-1(F_{side}) will be described.

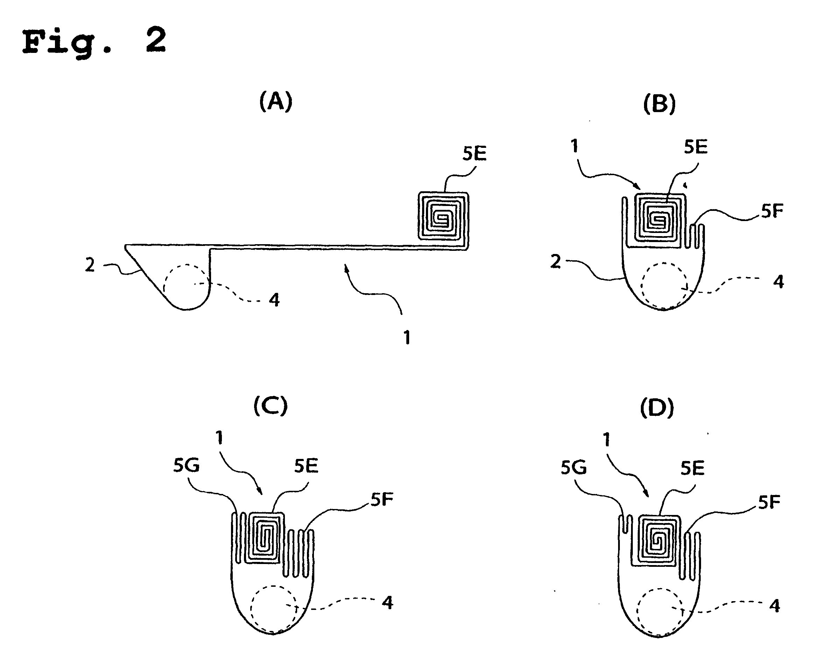

Figs. 2(A)-2(D) show the variations of the folding method of Figs. 1(Aₚₗₐₙ)-1(F_{side}), in the fourth stage (corresponding to Fig. 1(E_{side})) and the final stage (corresponding to Fig. 1(F_{side})). It should be noted that, in the folding methods shown in Figs. 2(A)-2(D), the process prior to the fourth stage is the same as that shown in Figs. 1(A)-1(D). In the fourth stage of the folding process, as shown in Fig. 2(A), the tip portion of the bag 1 is rolled up to form a rolled-up body 5E in such a manner that a surface of the bag at the windshield side becomes the outer surface of the rolled-up body. Then, in the final stage of the folding process, as shown in Fig. 2(B), the rolled-up body 5E of the bag 1 is accommodated in the airbag case 2. At this point, an accordion fold looseness 5F is formed only on the windshield side (the right hand side) of the rolled-up body 5E of the bag 1.

Figs. 2(C) and 2(D) show other variations of Fig. 2(B). As shown in Figs. 2(C) and 2(D), accordion fold looseness 5F, 5G may be formed on both the windshield side and the counter-windshield side. In this case, as shown in Fig. 2(C), the number of folds of the looseness 5F on the windshield side should be larger than that of folds of the looseness 5G on the counter-windshield side or, as shown in Fig. 2(D), the length of fold of the looseness 5F on the windshield side should be longer than that of folds of the looseness 5G on the counter-windshield side. In case that the adjustment is made with the length of the looseness as shown in Fig. 2(D), the length of fold of the looseness 5F on the windshield side is preferably twice or more as long as that of fold of the looseness 5G on the counter-windshield side.

The description will now be made as regard to the configurations of the passenger airbag, during its deployment, which is folded as mentioned above.

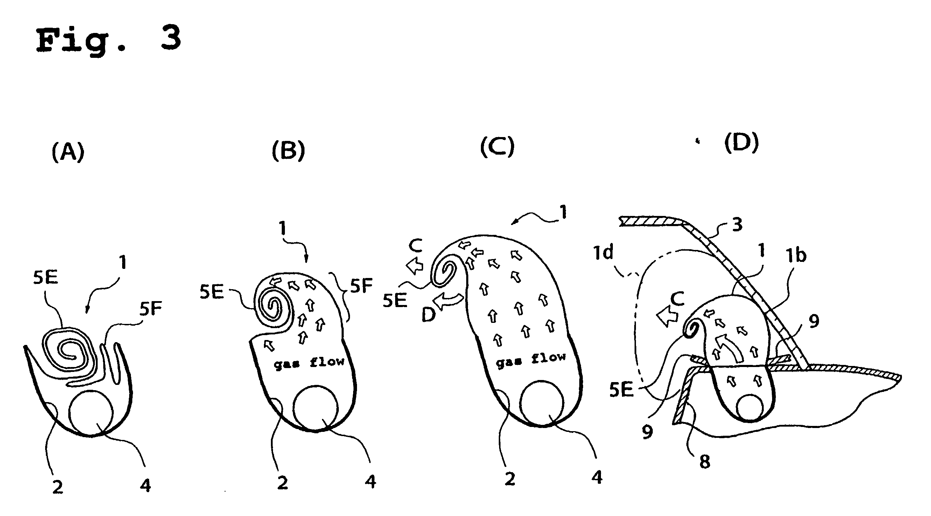

Figs. 3(A)-3(D) are side views of the bag 1 taken from the lateral side, illustrating the configurations of the passenger airbag, during its deployment, as shown in Fig. 2(B). Fig. 3(A) shows the state before the deployment. As gas flows from the inflator 4 within the airbag case 2 into the bag 1, the bag 1 starts its deployment with the pressure of the gas as shown in Fig. 3(B). The gas is apt to flow into the looseness 5F on the windshield side because of the lower fluid resistance than that of the rolled-up body 5E of the bag 1 shown in Fig. 3(A). Therefore, as shown in Fig. 3(B), the bag 1 starts its deployment at the looseness 5F on the windshield side first.

On the other hand, gas does not enter the rolled-up body (core) 5E of the tip portion of the bag 1 yet. There is no looseness on the counter-windshield side so that the gas flows into the windshield side earlier than the counter-windshield side. As shown in Fig. 3(C), the rolled-up body 5E is deployed with undoing its roll toward a portion above the counter-windshield side (shown by arrows C and D). It should be noted that, if the tip portion of the bag 1 is rolled up in the opposite direction of that in Fig. 2(A) to form a rolled-up body, the rolled-up body 5E should be deployed with undoing its roll toward the windshield, so it is not preferable.

Fig. 3(D) shows the bag 1 which is advanced in its deployment and also shows the fully deployed bag. In Fig. 3(D), the bag 1 shown by a solid line is in the state immediately before the completion of its deployment and the bag 1d shown by a chain double-dashed line is in the fully deployed state. The direction of deployment of the bag 1 is not toward the upper windshield 3 and is toward an upper area of the counter-windshield side (arrow C). Therefore, the rolled-up body 5E is prevented from directly striking the windshield 3. A contact portion 1b of the bag 1 which comes in contact with the windshield 3 is already inflated with its folded portion undone before the contact with the windshield 3. Since the force applied to the windshield 3 by the bag 1 is therefore distributed so as to reduce the pressure on the windshield 3 and the direct strike by the rolled-up body (core) 5E is prevented, the undesired local pressure on the windshield 3 can be avoided.

As stated above, according to the passenger airbag and the folding method thereof of this embodiment, the looseness 5F is provided only on the windshield side when accommodating the bag 1 in the airbag case 2. As a result, gas first flows into the looseness 5F during the deployment of the bag 1. Therefore, the bag starts its deployment from a part on the windshield side and the contact portion 1b of the bag 1, which is already inflated with its folded portion undone, comes in contact with the windshield 3, so the force applied to the windshield 3 is distributed so as to reduce the pressure on the windshield 3.

Since the tip portion of the bag 1 is folded or rolled up on the counter-windshield side, the rolled-up body 5E or the accordion fold portion 5H of the bag is prevented from being directed toward the windshield 3 during the deployment of the bag 1.

The application of undesired local pressure on the windshield 3 by the bag 1 can be prevented, thereby relieving measures, which have been taken, for example, reducing the output of the inflator, adjusting the mount position of the bag and/or the angle for mounting the airbag case, and increasing the strength of the windshield.

As apparent from the above description, the present invention can provide a passenger airbag which can provide suitable deployment to secure sufficient ability for restraining an occupant, which is improved on the smoothness of the deployment, and which undesired pressure on a glass can be prevented without increasing the cost, and also can provide a folding method used therefor.

## Claims

1. A method of folding an airbag to be deployed in front of a front passenger seat towards an upper portion of the passenger, said airbag comprising a bag portion (1b) to be arranged on the windshield side of the airbag (1) and a bag portion to be arranged on the counter-windshield side of the airbag (1) and facing the passenger, comprising the steps:
a) placing the airbag (1) in a plane so that a tip of the airbag (1) is located at the windshield side of the airbag (1) and an airbag case (2) is located at the counter-windshield side of the airbag (1),
b) folding two lateral sides of the airbag (1) inwardly towards the centre of the airbag (1) to form bellows (5D) having a width which is equal or smaller than the width of the airbag case (2),
and is **characterized by** the steps:
c) folding ends of both the windshield side and the counter-windshield side of the airbag (1) in accordion shape to have looseness (5F, 5G) on both the windshield side and the counter-windshield side wherein, the length of the looseness (5F) on the windshield side is twice or more as long as that of the looseness (5G) on the counter-windshield side and
d) folding or rolling up a tip portion (5E; 5H) of the airbag (1) on the counterwindshield side of the airbag (1) and then accommodating said airbag (1).

2. A method as claimed in claim 1, wherein in step c) the tip portion (5E; 5H) is rolled or folded up and in step d) the looseness (5F, 5G) are folded.

3. A method as claimed in claims 1 or 2, wherein the bellows (5D) are formed from double-folded edge portions (5A, 5B) on each lateral side of the airbag (1), said edge portions (5A, 5B) are overlaid on each other and concavities (5C) are formed between the edge portions (5A, 5B).

4. An airbag to be deployed in front of a front passenger seat toward an upper portion of a passenger, said airbag comprising a bag portion (1b) to be arranged on the windshield side of the airbag (1) and a bag portion to be arranged on the counter-windshield side of the airbag (1) and facing the passenger, said airbag (1) being folded according to the method of claims 1, 2 or 3 and wherein, the looseness (5F) on the windshield side is arranged so that during deployment of said airbag (1) larger volume of gas flows into the looseness (5F) on the windshield side compared to that on the counter-windshield side and the windshield side is deployed prior to the counter-windshield side.

5. An airbag as claimed in claim 4, wherein the tip portion (5E; 5H) is arranged between the looseness (5F, 5G) to be folded or rolled up on the counter-windshield side when accommodated, whereby said tip portion (5E) is deployed towards an upper area of the counter-windshield side.

## Patentansprüche

1. Verfahren zum Falten eines Airbags, der vor einem Beifahrersitz hin zu einem oberen Abschnitt des Beifahrers zu entfalten ist, wobei der Airbag einen Sackabschnitt (1b), der auf der Frontscheibenseite des Airbags (1) anzuordnen ist, und einen Sackabschnitt aufweist, der auf der Frontscheibengegenseite des Airbags (1) anzuordnen ist und zum Beifahrer weist, mit den folgenden Schritten:
a) Plazieren des Airbags (1) in einer Ebene, so daß eine Spitze des Airbags (1) an der Frontscheibenseite des Airbags (1) liegt und ein Airbaggehäuse (2) an der Frontscheibengegenseite des Airbags (1) liegt,
b) Falten zweier Querseiten des Airbags (1) nach innen zur Mitte des Airbags (1), um Faltenbälge (5D) mit einer Breite zu bilden, die gleich oder kleiner als die Breite des Airbaggehäuses (2) ist,
**gekennzeichnet durch** die folgenden Schritte:
c) Falten von Enden sowohl der Frontscheibenseite als auch der Frontscheibengegenseite des Airbags (1) in Akkordeonform, um Lagentrennung (5F, 5G) sowohl auf der Frontscheibenseite als auch auf der Frontscheibengegenseite zu haben, wobei die Länge der Lagentrennung (5F) auf der Frontscheibenseite mindestens doppelt so lang wie die der Lagentrennung (5G) auf der Frontscheibengegenseite ist, und
d) Einfalten oder Einrollen eines Spitzenabschnitts (5E; 5H) des Airbags (1) auf der Frontscheibengegenseite des Airbags (1) und anschließendes Unterbringen des Airbags (1).

2. Verfahren nach Anspruch 1, wobei im Schritt c) der Spitzenabschnitt (5E; 5H) eingerollt oder eingefaltet wird und im Schritt d) die Lagentrennung (5F, 5G) gefaltet wird.

3. Verfahren nach Anspruch 1 oder 2, wobei die Faltenbälge (5D) aus doppelt gefalteten Kantenabschnitten (5A, 5B) auf jeder Querseite des Airbags (1) gebildet, die Kantenabschnitte (5A, 5B) übereinander gelegt und Konkavitäten (5C) zwischen den Kantenabschnitten (5A, 5B) gebildet werden.

4. Airbag, der vor einem Beifahrersitz zu einem oberen Abschnitt eines Beifahrers hin zu entfalten ist, wobei der Airbag einen Sackabschnitt (1b), der auf der Frontscheibenseite des Airbags (1) anzuordnen ist, und einen Sackabschnitt aufweist, der auf der Frontscheibengegenseite des Airbags (1) anzuordnen ist und zum Beifahrer weist, der Airbag (1) gemäß dem Verfahren nach Anspruch 1, 2 oder 3 gefaltet ist und wobei die Lagentrennung (5F) auf der Frontscheibenseite so angeordnet ist, daß bei Entfaltung des Airbags (1) größeres Gasvolumen in die Lagentrennung (5F) auf der Frontscheibenseite verglichen mit der auf der Frontscheibengegenseite strömt und die Frontscheibenseite vor der Frontscheibengegenseite entfaltet wird.

5. Airbag nach Anspruch 4, wobei der Spitzenabschnitt (5E; 5H) zwischen der Lagentrennung (5F, 5G) angeordnet ist, die auf der Frontscheibengegenseite im untergebrachten Zustand einzufalten oder einzurollen ist, wodurch der Spitzenabschnitt (5E) hin zu einer oberen Fläche der Frontscheibengegenseite entfaltet wird.

## Revendications

1. Procédé de pliage d'un coussin de sécurité gonflable (airbag) à déployer devant un siège de passager avant en direction d'une partie supérieure du passager, ledit coussin de sécurité gonflable comprenant une partie de coussin (1b) à disposer sur le côté pare-brise du coussin de sécurité gonflable (1) et une partie de coussin à disposer sur le côté contre-pare-brise du coussin de sécurité gonflable (1) et en regard du passager, comprenant les étapes :
a) placement du coussin de sécurité gonflable (1) dans un plan, de telle sorte qu'une pointe du coussin de sécurité gonflable (1) est située sur le côté pare-brise du coussin de sécurité gonflable (1) et un boîtier de coussin de sécurité gonflable (2) est située sur le côté contre-pare-brise du coussin de sécurité gonflable (1),
b) pliage des deux côtés latéraux du coussin de sécurité gonflable (1) vers l'intérieur en direction du centre du coussin de sécurité gonflable (1), pour former un soufflet (5D) ayant une largeur qui est égale ou inférieure à la largeur du boîtier du coussin de sécurité gonflable (2),
et est **caractérisé par** les étapes :
c) pliage des extrémités à la fois du côté pare-brise et du côté contre-pare-brise du coussin de sécurité gonflable (1) en forme d'accordéon pour avoir une marge de liberté (5F, 5G) à la fois sur le côté pare-brise et sur le côté contre-pare-brise, dans lequel la longueur de la marge de liberté (5F) sur le côté pare-brise est égale à deux fois ou davantage la longueur de celle de la marge de liberté (5G) sur le côté contre-pare-brise et
d) pliage et enroulage d'une partie de pointe (5E ; 5H) du coussin de sécurité gonflable (1) sur le côté contre-pare-brise du coussin de sécurité gonflable (1) et ensuite logement dudit coussin de sécurité gonflable (1).

2. Procédé selon la revendication 1, dans lequel, à l'étape c), la partie de pointe (5E ; 5H) est enroulée ou repliée et à l'étape d) la marge de liberté (5F, 5G) est repliée.

3. Procédé selon les revendications 1 ou 2, dans lequel les soufflets (5D) sont formés à partir de parties de bord à double pliage (5A, 5B) sur chaque côté latéral du coussin de sécurité gonflable (1), lesdites parties de bord (5A, 5B) se chevauchent l'une sur l'autre et les concavités (5C) sont formées entre les parties de bord (5A, 5B).

4. Coussin de sécurité gonflable à déployer devant un siège de passager avant en direction d'une partie supérieure d'un passager, ledit coussin de sécurité gonflable comprenant une partie de coussin (1b) à disposer sur le côté pare-brise du coussin de sécurité gonflable (1) et une partie de coussin à disposer sur le côté contre-pare-brise du coussin de sécurité gonflable (1) et en regard du passager, ledit coussin de sécurité gonflable (1) étant plié selon le procédé des revendications 1, 2 ou 3, et dans lequel la marge de liberté (5F) sur le côté pare-brise est disposée de telle sorte que, pendant le déploiement dudit coussin de sécurité gonflable (1), un plus grand volume de gaz s'écoule dans la marge de liberté (5F) sur le côté pare-brise par rapport au côté contre-pare-brise, et le côté pare-brise est déployé avant le côté contre-pare-brise.

5. Coussin de sécurité gonflable selon la revendication 4, dans lequel la partie de pointe (5E ; 5H) est disposée entre la marge de liberté (5F, 5G) à plier ou à enrouler sur le côté contre-pare-brise lorsqu'il est logé, de sorte que la partie de pointe (5E) est déployée en direction d'une zone supérieure du côté contre-pare-brise.
